# EUROPÄISCHE PATENTANMELDUNG

(11) **EP 1 350 825 A1**
(43) Veröffentlichungstag der Anmeldung: **08.10.2003**
(21) Anmeldenummer: 03405159.9
(22) Anmeldetag: 07.03.2003
(51) Int. Cl.: C09J 4/00, C04B 26/04, C08K 5/00

(54) **Aushärtbare Masse und aushärtbare Mörtelmasse**

(30) Priorität: 19.03.2002 DE 10212067
(71) Anmelder: HILTI Aktiengesellschaft, 9494 Schaan (LI)
(72) Erfinder: Pfeil, Armin, 86916 Kaufering (DE); Bürgel, Thomas, 86899 Landsberg am Lech (DE); Hettich, Rainer, 81371 München (DE)
(74) Vertreter: Wildi, Roland

(57) **Zusammenfassung**

Die Erfindung wird mit einer aushärtbaren Masse, die eine Harzkomponente A mit einer Untergrundkomponente a, einem radikalischen polymerisierbaren Harz und die eine Härterkomponente B mit einer Unterkomponente b, einem peroxidischen Härter enthält. Die Komponenten A und B werden vor Verwendung der aushärtbaren Masse räumlich getrennt aufbewahrt und eine Aushärtung erfolgt erst nach Mischen der Komponenten A und B. Zur Verbesserung derartiger aushärtbarer Massen wird vorgeschlagen, der Komponente A eine Unterkomponente c, die Leucoform eines Farbstoffes, insbesondere eines Triphenylmethanfarbstoffes zuzugeben. Durch diese Massnahme wird es erreicht, dass ein gleichzeitiges Monitoring der Peroxidaktivität und des Mischfortschritts ohne Verzögerung der Härtung der Masse möglich ist.

## Beschreibung

Die vorliegende Patentanmeldung betrifft eine aushärtbare Masse der im Oberbegriff des Patentanspruchs 1 genannten Art sowie eine aushärtbare Mörtelmasse der im Oberbegriff des Patentanspruchs 8 genannten Art. Derartige Massen, die verstärkt oder unverstärkt vernetzbar sind, haben ein sehr breites Einsatzgebiet. Sie können in Gies-, Tränk-, Spachtelund Spritzverfahren in der Elektroindustrie, im Behälterbau, im Baubereich, im Schiffsbau, in der Kraftfahrzeugindustrie usw. für Beschichtungen und Verbindungen verwendet werden. Im Handauflege- Press-, Faserspritzverfahren und dergleichen können Formteile unterschiedlichster Art und für verschiedenste Zwecke aus verstärkten Massen hergestellt werden.

Derartige Massen können aber z.B. auch als Grundlage für Mörtelmassen dienen. Mörtelmassen der oben angegebenen Art dienen z.B. der Befestigung von Verankerungsmitteln wie z.B. Ankerstangen und dgl. in Bohrlöchern.

Unter aushärtbaren Massen werden Zweikomponenten-Harzsysteme verstanden, die eine oder mehrere - getrennt oder in Mischung vorliegende härtbare, einen Harz umfassende Komponenten einerseits und eine Härter-Komponente andererseits enthalten. Zur Beurteilung und Kontrolle der Mischqualität ist es möglich einer Komponente einen Farbstoff zuzusetzen, der dann nach dem Mischen gleichmässig verteilt in der Masse verteilt sein muss. Mit dieser Methode kann jedoch nicht erkannt werden, wenn das als Härter notwendige Peroxid aufgrund von Ueberlagerung seine Aktivität verloren hat.

Aus der US 3,390,121 ist ein Farbstoffindikator für Harze bekannt bei dem Diphenylaminverbindungen durch die Mischung mit Peroxiden eine Färbung ergeben, die nach der Aushärtung des Harzes wieder verschwindet, und die der Mischkontrolle dienen kann.

Von Nachteil hierbei ist jedoch, dass die Diphenylaminverbindungen für die Härtungsreaktion als verzögernd wirken, und somit längere Aushärtzeiten benötigt werden. Ferner ist mit einer derartigen Mischung keine Tieftemperaturhärtung möglich, und somit der Einsatzbereich derartiger Mischungen eingeschränkt.

Die Aufgabe der vorliegenden Erfindung liegt daher darin, eine aushärtbare Masse bereitzustellen die die geschilderten Nachteile vermeidet und die eine gute Mischindikation bietet.

Die Aufgabe wird durch die in Patentanspruch 1 genannten Massnahmen gelöst, denen folgende besondere Bedeutung zukommt.

Die Besonderheit der vorliegenden Erfindung besteht demnach darin, dass die aushärtbare Masse, welche eine Harz-Komponente A mit einer Unterkomponente a.) einem radikalisch polymerisierbaren Harz und eine Härter-Komponente B mit einer Unterkomponente b.) einem peroxidischen Härter umfasst und bei der die Komponenten A und B räumlich getrennt aufbewahrt werden und eine Aushärtung erst nachdem Vermischen der Komponenten A und B in Gang gesetzt wird, eine Unterkomponente c.), die Leucoform eines Farbstoffes, insbeondere eines Triphenylmethanfarbstoffes, in der Komponente A enthält. Durch diese Massnahme werden folgende Vorteile erreicht:
- ein gleichzeitiges Monitoring der Peroxidaktivität und des Mischfortschritts ist ohne Verzögerung der Härtung möglich, da die Leucoform eines Triphenylmethanfarbstoffes nicht verzögernd wirkt,
- die Farbindikation ist unabhängig von der Reaktionswärme,
- die aushärtbare Masse lässt sich auch bei tiefen Temperaturen verarbeiten, wobei die Farbindikation unvermindert ist.

Die Unterkomponente a.) ist dabei z.B. ein Harz aus der Gruppe der ungesättigten Polyester Harze Epoxyacrylatharze, urethanbildende Epoxidharze und Vinylesterurethanharze.

Derartige Epoxyacrylate und Vinylesterharze sind z. B. aus der DE 32 26 602, der DE 36 17 702 und der DE 39 40 309 bekannt.

Als Polyester sind die Veresterungsprodukte von ungesättigten und gesättigten Polycarbonsäuren und Polyalkoholen enthalten. Als ungesättigte Polycarbonsäuren werden hierfür meist Maleinsäure bzw. Maleinsäureanhydrid und Fumarsäure und als gesättigte Polycarbonsäuren meist o-Phthalsäure, iso-Phthalsäure, Tetrahydrophthalsäure, HET-Säure, Adipinsäure und dergleichen verwendet. Beispiele für Polyalkohole sind Ethylenglykol, 1,3-Propylenglykol, Neopentylglykol, 1,3-Butylenglykol, Glycerin.

Die ungesättigten Polyester-Harze sind meist in Lösungen in reaktionsfähigen (copolymerisierbaren) Lösungsmitteln enthalten. Hierbei kann es sich sowohl um Monovinylverbindungen als auch um polyfunktionelle, polymerisierbare Verbindungen handeln. Als wichtigstes reaktionsfähiges Monomeres (Reaktiwerdünner) wird Styrol verwendet. Daneben oder anstelle dieses Reaktivverdünners können auch vinylische Monomere wie (Meth)acrylsäure, (Meth)acrylsäurederivate, insbesondere (Meth)acrylsäureester, wie Acrylsäure-tert.butylester, Hydroxyethylmethacrylat usw. oder Verbindungen, die mindestens eine Allylgruppe aufweisen, wie z.B. Diallylphthalat und Triallylcyanurat eingesetzt werden. Als polyfunktionelle und damit vernetzende Verbindungen können Divinylbenzol, N.N-Divinyl-Harnstoff, N.N-Divinylcyanamid oder wiederum (Meth)acrylsäureester wie Butandioldimethacrylat, Ethylenglycoldimethacrylat bzw. Allylverbindungen, insbesondere Allylester von Carbonsäuren, wie Diallylphthalat, Diallylmaleinat, Diallylfumarat, und stark vernetzende Mittel wie Trimethylolpropantrimethacrylat oder Triallylcyanurat enthalten sein.

Die Lagerfähigkeit der ungesättigten Polyesterharze und der gegebenenfalls Vernetzungsmittel enthaltenden Massen ist beschränkt und temperatur- und zeitabhängig. Es tritt nach einiger Zeit Gelierung ein nach entsprechender, die Verarbeitung störender Zunahme der Viskosität. Zur Vermeidung der in Abwesenheit von Katalysatoren eintretenden frühzeitigen Härtung können, zB Inhibitoren wie Phenolderivate, wie tertiäre Butylbrenzkatechin, Chinone, Hydrochinone, Phosphitester, Ammoniumsalze, Schwefel, lod, siliziumorganische Verbindungen usw. zugesetzt werden.
Die Massen können ferner unverstärkt oder verstärkt sein, wobei als Verstärkungsmittel die üblichen Zusätze, namentlich auf mineralischer Basis, einschliesslich Fasern, wie Glasfasern enthalten sein können.

Die Verwendung von Vernetzungsmitteln auch anderen Typs, wie beispielsweise von Isocyanaten ist jedoch keineswegs ausgeschlossen.

Ferner können übliche Stabilisatoren wie z.B. Stoffe aus der Gruppe der Phenothiazine verwendet werden.

Vorteilhafterweise ist in der Komponente A noch eine Unterkomponente d.) ein Beschleuniger aus der Gruppe der aromatischen Amine enthalten. Durch diese Massnahme kann eine Reaktionsbeschleunigung erziehlt werden. Geeignete Beschleuniger sind z.B. Diethylanilin, Dimethyl-p-toluidin, Di-iso-propylol-p-toluidin um nur einige aus der Gruppe der aromatischen Amine zu nennen. Die Amine werden im allgemeinen in Mengen von 0,5 bis 3 Gew. % bezogen auf den ungesättigten Polyester eingesetzt.

Zusätzlich hierzu kann gemäss Anspruch 3 auch die Unterkomponente c.) als Beschleuniger wirksam sein. Durch diese Massnahme ist die Reaktionsbeschleunigung dann nicht nur vom Gehalt der Unterkomponente d.) in der Komponente A abhängig, sondern auch vom Gehalt der Unterkomponente c.) die Komponente c.), die Leucoform eines Triphenylmethanfarbstoffes, kann auch der einzige Beschleuniger in der Komponente A sein, wodurch die Beschleuniger Komponente d.) gänzlich eingespart wird.

Gemäss Anspruch 4 können die Unterkomponenten c.) und d.) in folgenden Anteilen bezogen auf das Gesamtgewicht der Unterkomponenten c.) und d.) in der Komponente A vorhanden sein:
Unterkomponente c.) in einem Anteil von 0,01 bis 100 Gew. %
Unterkomponente d.) in einem Anteil von 99,99 bis 0 Gew. %

Nach Anspruch 5 kann es von Vorteil sein, wenn der Gesamtanteil der Unterkomponenten c.) und d.) in der Komponente A bei 0,1 bis 4 Gew. %, bezogen auf das Gewicht der Komponente A, liegt.

Die Unterkomponente b.) der Komponente B kann gemäss Anspruch 6 ein organisches Peroxid sein. Vorzugseise ist ein derartiges organisches Peroxid aus der Gruppe der Diazyl-Peroxide. Eine bevorzugte Mischung kann so z.B. Dibenzoylperoxid, Cumolhydroperoxid, Bis(4-chlorbenzoyl)peroxid, tert-Butylhydroperoxid, Ketonperoxide, z.B. Methylethylketonperoxid und Cyclohexanonperoxid, sowie Alkylperester, wie z.B. t-Butyl-perbenzoat als Unterkomponente b.) enthalten.

Es können jedoch auch andere Peroxide oder Hydroperoxide zum Einsatz kommen. Die Peroxide können pulver- oder pastenförmig oder flüssig und in üblicher Menge eingesetzt werden.

Eine weitere Aufgabe liegt in der Bereitstellung einer aushärtbaren Mörtelmasse, die die Verwendungen nachteiliger aushärtbarer Massen vermeidet.

Eine derartige Mörtelmasse wird gemäss Anspruch 8 dadurch zur Verfügung gestellt, dass der Mörtel eine härtbare Masse mit den Merkmalen des Anspruchs 1 enthält. Die erfindungsgemässe härtbare Mörtelmasse lässt sich auch bei tiefen Temperaturen verarbeiten, wobei eine Farbindikation die Aktivität des peroxidischen Härters anzeigt und gleichzeitig den Mischungsfortschritt anzeigt.

Die erfindungsgemässe härtbare Mörtelmasse ist bestimmt zur Verwendung für Dübel-, Haftund Spachtelzwecke, insbesondere zur Verwendung in Auspressgeräten. Zusätzlich zu dem bereits vorbeschriebenen härtbaren Massen kann die erfindungsgemässe härtbare Mörtelmasse noch Füllstoffe, wie zB Quarzsand oder andere mineralische und nichtmineralische Materialien enthalten.

Weitere Vorteile und Massnahmen der Erfindung ergeben sich aus den Unteransprüchen und den nachfolgenden Beispielen, die der Erläuterung der Erfindung dienen, diese jedoch nicht einschränken:

### Beispiel 1

Zu je 15 Teilen Festharz (hier: Vinylesterharz), Ethylenglycoldimethacrylat (Reaktiwerdünner) und Hydroxymethylmethacrylat (Reaktiwerdünner), 0,6 Teilen Dimethyl-p-toluidin (Beschleuniger) und 0,1 Teil t-Butylbrenzcatechin (Inhibitor), 36 Teilen Quarzsand (Füllstoff), 15 Teilen Portlandzement (Füllstoff) sowie 3 Teilen pyrogener Kieselsäure (Verdickungsmittel) werden 0,3 Teile Leucomalachitgrün mit der Strukturformel 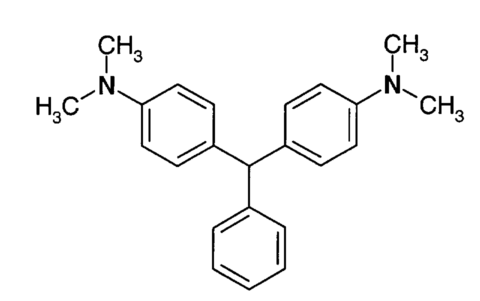 zugesetzt.

Wird die nahezu farblose Masse in einem Statikmischer mit einer B Komponente mit den Inhaltsstoffen:
40 Teile wässrige Dispersion von Dibenzoylperoxid (20%; Härter), 57 Teile Quarzmehl (Füllstoff) und 3 Teile pyrogene Kieselsäure (Verdickungsmittel)
vermengt, färbt sich die gebildete Mörtelmasse grün, wobei der Mischfortschritt im Mischer beobachtet werden kann. Die grüne Färbung gibt die Aktivität des peroxidischen Härters an. Die Gelzeit der angegebenen Rezeptur liegt bei Raumtemperatur bei ca. 2 Minuten.

### Beispiel 2

Wird die gleiche Mischung bei einer Temperatur von -5 Grad Celsius verarbeitet verlängert sich die Gelzeit auf 8,5 Minuten. Die Farbindikation bleibt jedoch unverändert.

### Beispiel 3

Es wird eine zu Beispiel 1 identische Mischung hergestellt, die jedoch als Komponente c.) anstelle des Farbstoffes Leuco-Malachitgrün den Farbstoff Leuco-Kristallviolett, mit der Strukturformel: 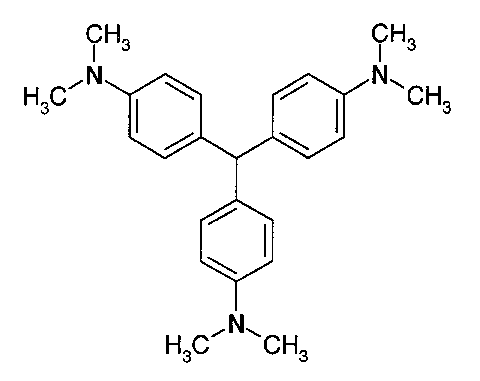 enthält. Beim Vermengen färbt sich die Masse violett, wobei die Färbung den Mischfortschritt und die Aktivität des peroxidischen Härters angibt. Die Gelzeit dieser Rezeptur liegt bei Raumtemperatur ebenfalls bei ca. 2 Minuten.

### Beispiel 4

Es wird eine zu Beispiel 1 identische Mischung hergestellt, die jedoch als Komponente c.) den Farbstoff Leuco-Indigo, mit der Strukturformel: 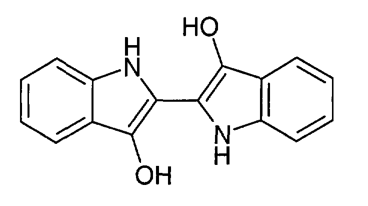 enthält. Die Mischung färbt sich in einem Indigo Farbton. Die Gelzeit verlängert sich geringfügig auf 4,5 bzw. 16 min (23 resp. -5°C) und die Farbindikationseigenschaften bei Raumtemperatur entsprechen denen aus den Beispielen 1 und 3.

## Patentansprüche

1. Aushärtbare Masse, enthaltend eine Harz-Komponente A mit einer Unterkomponente
a.) einem radikalisch polymerisierbaren, ggf. in Reaktiwerdünnern gelösten Harz und eine Härter-Komponente B mit einer Unterkomponente
b.) einem peroxidischen Härter
wobei die Komponenten A und B räumlich getrennt aufbewahrt werden und eine Aushärtung erst nach Vermischen der Komponenten A und B in Gang gesetzt wird,
**dadurch gekennzeichnet,**
**dass** die Komponente A eine Unterkomponente
c.) die Leucoform eines Farbstoffes, in bevorzugter Weise eines Triphenylmethanfarbstoffes, umfasst.

2. Aushärtbare Masse nach Anspruch 1, **dadurch gekennzeichnet, dass** die Komponente A eine Unterkomponente d.), einen Beschleuniger aus der Gruppe der aromatischen Amine enthält.

3. Aushärtbare Masse nach Anspruch 1, **dadurch gekennzeichnet, dass** die Unterkompomponente c.), die Leucoform eines Farbstoffes, insbesondere eines Triphenylmethanfarbstoffes ein Beschleuniger ist.

4. Aushärtbare Masse nach einem der Ansprüche 1 bis 3, **dadurch gekennzeichnet, dass** die Unterkomponente c.) in einem Anteil von 0,01 bis 100 Gew. % und die Unterkomponente d.) in einem Anteil von 99,99 bis 0 Gew. % in der Komponente A, bezogen auf das Gesamtgewicht von c.) und d.) in der Komponente A, enthalten ist.

5. Aushärtbare Masse nach einem der Ansprüche 1 bis 4, **dadurch gekennzeichnet, dass** der Gesamtanteil der Unterkomponenten c.) und d.) in der Komponente A bei 0,1 - 4 Gew. %, bezogen auf das Gewicht der Komponente A, liegt.

6. Aushärtbare Masse nach Anspruch 1, **dadurch gekennzeichnet, dass** die Unterkomponente b.) der Komponente B ein organisches Peroxid ist.

7. Aushärtbare Masse nach Anspruch 1 oder 6, **dadurch gekennzeichnet, dass** die Komponente b.) in einem Anteil von 0,1 bis 10 Gew. %, bezogen auf das Gesamtgewicht der Unterkomponenten c.) und b.), vorliegt.

8. Aushärtbare Mörtelmasse, insbesondere zur Befestigung von Verankerungensmitteln in Bohrlöchern mit einem Gehalt an wenigstens einer aushärtbaren Masse und wenigstens einem Härter,
**dadurch gekennzeichnet,**
**dass**, der Mörtel eine härtbare Masse gemäss Anspruch 1 enthält.
